# EUROPÄISCHE PATENTSCHRIFT

(11) **EP 1 650 060 B1**
(45) Veröffentlichungstag und Bekanntmachung des Hinweises auf die Patenterteilung: **01.10.2008**
(21) Anmeldenummer: 05022167.0
(22) Anmeldetag: 11.10.2005
(51) Int. Cl.: B60D 1/14, B62D 47/02

(54) **Anhängerkupplungsvorrichtung für ein selbsttragendes Karosseriegerippe und selbsttragendes Karosseriegerippe**
Towing hook assembly for a self-supporting body skeleton and self-supporting body skeleton
Dispositif d'attelage pour une ossature de carrosserie autoportante et ossature de carrosserie autoportante

(30) Priorität: 22.10.2004 DE 102004051954
(43) Veröffentlichungstag der Anmeldung: 26.04.2006
(73) Patentinhaber: Göppel Karosserie- und Fahrzeugbau, 86154 Augsburg (DE)
(72) Erfinder: Rager, Johann, 86405 Meitlingen (DE); Schmidt, Bernhard, 86405 Meitlingen (DE)
(74) Vertreter: Schmid, Nils T.F.

(56) Entgegenhaltungen:
- EP-A- 0 805 069
- DE-U1- 8 513 611
- US-A- 2 144 889
- US-A- 4 948 157
- US-A- 6 102 605

## Beschreibung

Die Erfindung betrifft eine Anhängerkupplungsvorrichtung für ein selbsttragendes Karosseriegerippe eines Kraftfahrzeugs, wie eines Omnibusses.

Es ist bekannt, daß Karosseriegerippe eines Omnibusses vorteilhafterweise in einer selbsttragenden Bauweise für eine hohe Steifigkeit bei geringem Eigengewicht konstruiert sein können. Diese selbsttragende Bauweise kann dadurch realisiert werden, daß der bei einer herkömmlichen, getrennten Karosseriebauweise verwendete schwergewichtige Leiterrahmen durch eine Bodengruppe ersetzt wird, die neben den tragenden Teilen, wie Motorträger, Längsträger, Querträger, auch Radkästen etc. bildet. Durch weitere mit der Bodengruppe verschweißte Blechteile, wie Seitensäulen, Dachrahmen, Dach, Kotflügel, eingeklebte Front-Heckscheiben ergibt sich eine selbsttragenden Karosserie in der sogenannten Schalenbauweise. Eine weitere selbsttragende Bauweise wird häufig als Gitterrahmenbauweise bezeichnet. Dabei wird ein fachwerkartiges Stabsystem eingesetzt.

Ferner ist bekannt, am Heck eines auf der Basis eines selbsttragenden Karosseriegerippes aufgebauten Omnibusses eine Anhängerkupplung vorzusehen, um Transportanhänger für leichte Lasten, wie beispielsweise Gepäck, ankoppeln zu können. Diese bekannten Anhängerkupplungen sind ausgelegt, Zugkräfte, die von Zugmassen von bis zu 3,5 t hervorgerufen werden, in das Zugfahrzeug einzuleiten. Es ist mit den herkömmlichen Anhängerkupplungen allerdings nicht möglich, einen Transportanhänger, insbesondere zum Transport von Personen, anzukoppeln, weil die durch Zugmassen von 10 t und mehr zu erwartenden Zugkräfte den heckseitigen Teil der selbsttragenden Karosserie-Struktur stark deformieren und sogar zerstören würden.

DE 85 13 611 U1 offenbart einen Fahrzeuggelenkzug mit einem Vorderwagen und einen Hinterwagen, die beide durch einen Gitterrahmen gebildet sind. Zwischen dem Vorder- und dem Hinterwagen im Bereich der Gelenkzugverbindung ist eine Kupplungsvorrichtung mit zwei an dem Gitterrahmen angebundenen Kraftübertragungsarmen vorgesehen. US 2,144,889 A betrifft einen Wohnanhänger mit einem Gitterrahmen, bei dem eine Anhängerkupplungsvorrichtung mit dem Gitterrahmen über mehrere Kraftübertragungsarme verbunden ist. WO 01/76896 A1 betrifft eine LKW-Zugmaschine mit einem Leiterrahmen.

Es ist Aufgabe der Erfindung, die Nachteile des Standes der Technik zu überwinden, insbesondere eine Anhängerkupplungsvorrichtung zu schaffen, mit der auch Zugmassen in einem Bereich von über 10 t ohne Beeinträchtigung des Heckbereichs an einem Omnibus oder an einem anderen ziehenden Fahrzeug, wie einem Zwischenanhänger, ankoppelbar sind.

Diese Aufgabe wird durch die Merkmale von Patentanspruch 1 gelöst.

Danach ist eine Anhängerkupplungsvorrichtung vorgesehen, mit der die heckseitige Rahmenstruktur derart versteift werden kann, daß ohne Umbaumaßnahmen am herkömmlichen Omnibusheck Zugkräfte von Zugmassen über 15t ohne weiteres ertragen werden können. Überraschenderweise zeigte sich, daß durch mehrere, sich von einer zentralen Kraftübertragungsstelle der Anhängerkupplung erstreckende Krafteintragsarme derart geringe Belastungszustände am Karosseriegerippe hervorgerufen werden, daß sie geringer als die Belastungsgrenzen des Karosseriegerippes an den Anbindungspunkten sind. Die Krafteintragsarme sind erfindungsgemäß derart bemessen und ausgeführt, daß sie an dem heckseitigen Achsträger des Karosseriegerippes und/oder an dem Gitterrahmen befestigbar sind und die Betriebszug- und/oder - druckkräfte in das Karosseriegerippe kraft- und formschlüssig einleiten können. Mit der erfindungsgemäßen Maßnahme werden die auf die Anhängerkupplung und in die Karosserie des Omnibusses einzuleitenden Zugkräfte auf verschiedene Krafteinleitungspunkte der Karosserie verteilt, so daß Spannungsspitzen, die zu einer Zerstörung des Karosseriegerippes des Omnibusses führen können, vermieden werden. Unerwarteterweise stellte sich heraus, daß die mehrarmige Krafteintragung in das damit auch verstärkte Karosseriegerippe das Gesamtgewicht des Omnibusses nur geringfügig erhöht.

Vorzugweise ist die durch die Krafteintragsarme gebildete Verstärkungs- oder Versteifungsstruktur derart in das Karosseriegerippe integriert, daß sie die Fahrzeugaußenkontur nicht verläßt, sondern vollständig darin integriert ist. Auf diese Weise werden durch die erfindungsgemäße Anhängerkupplungsvorrichtung keine überstehenden Bauteile gebildet.

Bei einer bevorzugten Ausführung der Erfindung sind wenigstens zwei, vorzugsweise mehr als zwei Krafteintragsarme vorgesehen, die traversenartig zum Überwinden des heckseitigen Bauraums des Karosseriegerippes bemessen und zur Anbindung an Achsträger ausgeführt sind. Hierbei kann einer der traversenartigen Krafteintragsarme sich im wesentlichen in Fahrtrichtung von der Kraftübertragungsstelle erstrecken, insbesondere unterhalb und außerhalb des heckseitigen Motorraumes. Für den traversenartigen Krafteintragsarm können Stahl-Träger in verschiedener Querschnittsform, insbesondere als C-, L- oder I-Träger, ausgeführt sein.

Bei einer Weiterbildung kann die Erfindung auch mehrere, vorzugsweise mehr als zwei, Krafteintragsarme, insbesondere zusätzlich zu den obengenannten traversenartigen Krafteintragsarmen aufweisen, welche zur festen Anbindung an den Gitterrahmen insbesondere an verschiedene Knoten des Gitterrahmens ausgeführt sind. Auf diese Weise ist es möglich, eine netzartige, sternförmige oder krakenartige, sich von der zentralen Kraftübertragungsstelle erstreckende Anhängerkopplungsstruktur zu bilden, die hohe Zugkräfte bei sehr geringem Eigengewicht übertragen kann.

Um die Anhängerkopplungsstruktur selbst zu versteifen, können die Krafteintragsarme über Versteifungsstreben miteinander verbunden sein. Auf diese Weise kann eine fachwerksartige Struktur für die Anhängerkopplung gebildet sein.

Bei einer Weiterbildung der Erfindung ist die Kraftübertragungsstelle durch eine behälterförmige Bauweise verformungssteif ausgebildet, die eine Bodenplatte und eine sich davon erstreckende, umlaufende Wand aufweist. Vorzugsweise kann die behälterförmige Kraftübertragungsstelle einseitig offen sein, wobei insbesondere die offene Seite der behälterförmigen Kraftübertragungsstelle dem Karosseriegerippe zugewandt ist.

Vorzugsweise erstrecken sich die Krafteintragsarme von der Wand, insbesondere der benachbarten Wand, der behälterförmigen Kraftübertragungsstelle hin zum Gitterrahmen oder dem Achsträger.

Bei einer bevorzugten Ausführung der Erfindung weist wenigstens ein Krafteintragsarm achsträgerseitig und/oder gitterrahmenseitig mehrere Befestigungsstellen zum Anbinden an den Achsträger und/oder an den Gitterrahmen auf. Auf diese Weise kann die Zahl von Anbindungspunkten um ein vielfaches erhöht werden, ohne die Anzahl der Krafteintragsarme zu erhöhen.

Des weiteren betrifft die Erfindung ein selbsttragendes Karosseriegerippe für einen Omnibus, welches Karosseriegerippe zumindest einen heckseitigen Achsträger, einen Gitterrahmen und eine erfindungsgemäße Anhängerkupplung aufweist.

Weitere Vorteile, Eigenschaften und Merkmale der Erfindung werden durch die folgende Beschreibung einer bevorzugten Ausführung der Erfindung anhand der beiliegenden Zeichnungen deutlich, in denen zeigen:
Figur 1a eine perspektivische Teilansicht eines bekannten, selbsttragenden Karosseriegerippes eines Omnibusses;
Figur 1b eine perspektivische Ansicht des Karosseriegerippes gemäß Figur 1 mit integrierter erfindungsgemäßer, schematisch dargestellter Anhängerkupplung;
Figur 2 eine perspektivische Ansicht einer erfindungsgemäßen Anhängerkupplungsvorrichtung; und
Figur 3 eine perspektivische Ansicht einer erfindungsgemäßen Anhängerkupplungsvorrichtung, die in einen teilweise dargestellten Heckbereich des selbsttragenden Karosseriegerippes integriert ist.

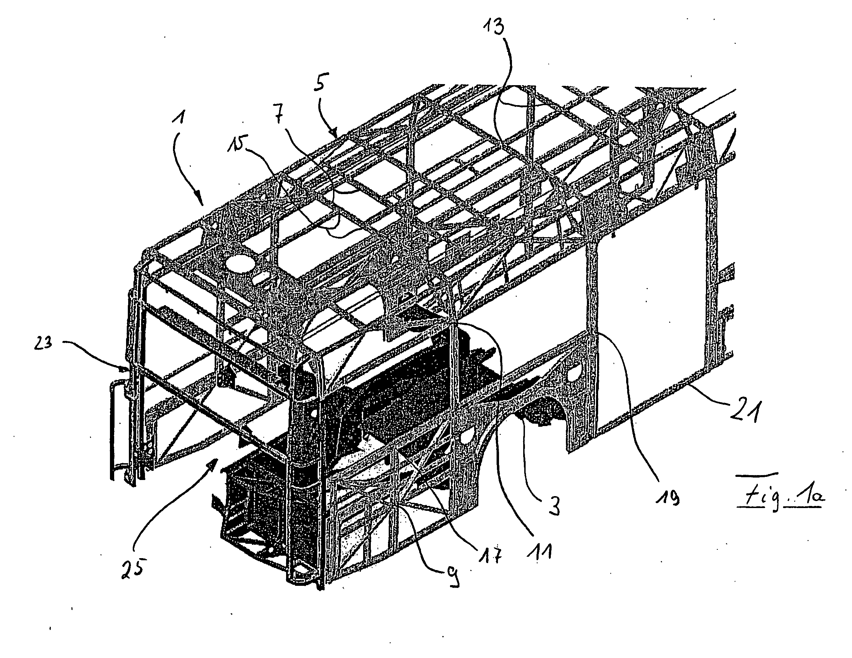

Das in Figur 1a gezeigte, bekannte Karosseriegerippe eines Omnibusses ist mit Bezugszeichen 1 versehen.

Das Karosseriegerippe 1 umfaßt einen heckseitigen, sich über die gesamte Breite des Karosseriegerippes 1 und sich zu dessen heckseitigem Ende erstreckenden Achsträger 3 und einen Gitterrahmen 5, der fachwerksartig strukturiert ist. Der Gitterrahmen 5 ist durch miteinander verbundene Stäbe und Querverstrebungen 7 gebildet. Dabei werden Hauptverbindungsknotenpunkte 9, 11, 13, an denen sich mehr als vier Stäbe 7 treffen, und Nebenknotenpunkte 15, 17, 19 gebildet, an denen sich drei Stäbe 7 treffen.

Das in Figur 1a dargestellte Karosseriegerippe 1 ist für einen niederflurigen Fahrzeugaufbau eines Omnibusses geeignet, um Türschwellen 21 mit einem so gering wie möglichen Abstand zur Fahrbahnoberfläche zu positionieren. Am Heck 23 des Karosseriegerippes 1 ist der Motor des Omnibusses in einem dafür vorgesehenen Motorraum 25 einzubauen.

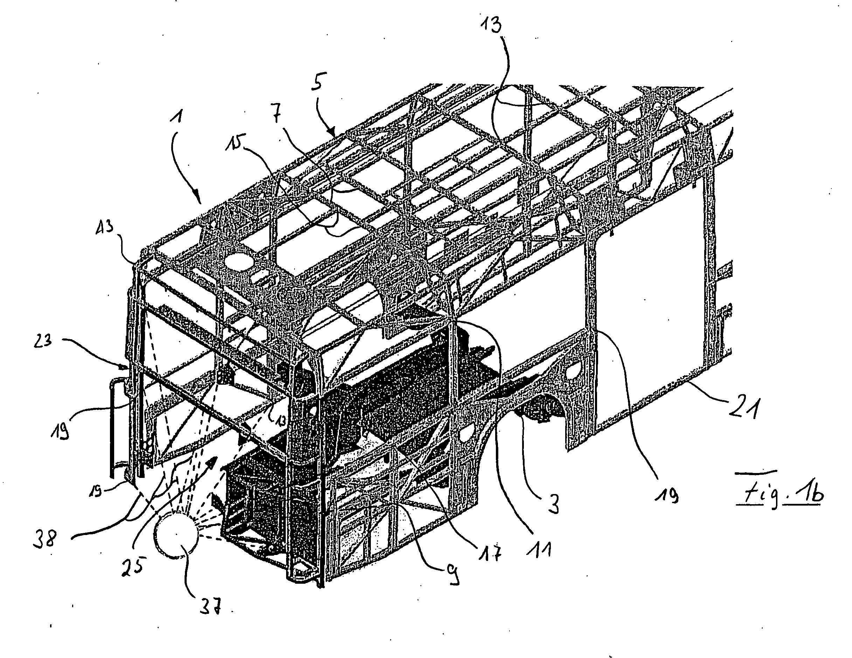

In Figur 1b ist das Karosseriegerippe 1 unverändert dargestellt, wobei identische Bauteile mit identischen Bezugszeichen versehen sind. In das Karosseriegerippe ist eine schematisch dargestellte erfindungsgemäße Anhängerkupplungsvorrichtung mit einer zentralen Kraftübertragungsstelle 37 und mehrere Kraftübertragungsarme 38 integriert, die sich sternförmig von der zentralen Kraftübertragungsstelle 37 hin zu Angriffspunkten des fachwerkartigen Karosseriegerippes 1 erstrecken. Die Angriffspunkte sind vorteilhafterweise Hauptverbindungsknotenpunkte, wie 9 bis 13, oder Nebenknotenpunkte, wie 15 bis 19. Auf diese Weise kann eine Vielzahl von Krafteintragsstellen geschaffen werden, um Spannungspitzen am Karosseriegerippe 1 zu vermeiden.

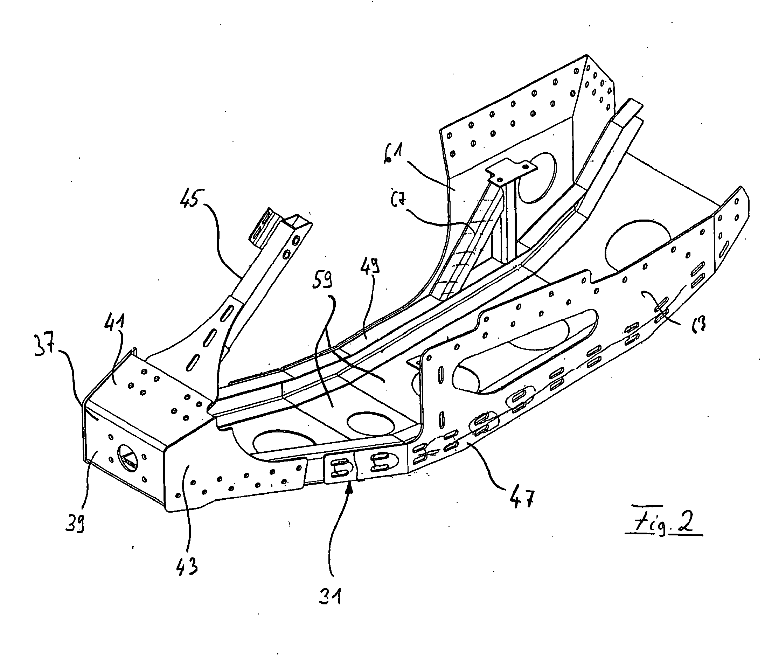

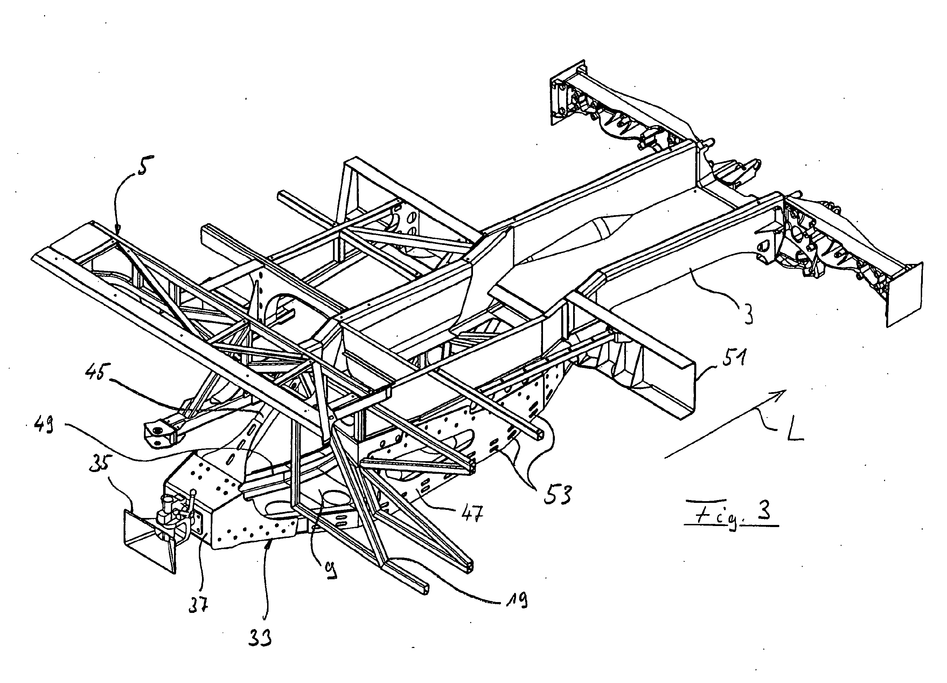

Figur 2 zeigt eine erfindungsgemäße, als Rahmenversteifung 31 ausgebildete Anhängerkupplung 33. Wie in Figur 3 dargestellt, ist die Rahmenversteifung in den Heckbereich des Karosseriegerippes 1 eingebaut. Die erfindungsgemäße Anhängerkupplungsvorrichtung umfaßt eine herkömmliche Anhängerkupplung 35, die lösbar an der zentralen Kraftübertragungsstelle 37 befestigt ist.

Um eine auf die Betriebsbelastung angepaßte, starre Kraftübertragungsstelle 37 zu gewährleisten, ist diese in Form eines Behälters ausgeführt, der einen Boden 39 und vier im wesentlichen senkrecht zueinander stehende Seitenwandabschnitte 41, 43 umfaßt. Die behälterförmige Kraftübertragungsstelle 37 ist an ihrer zum Achsträger 3 zugewandten Seite hin offen.

Die erfindungsgemäße Anhängerkupplungsvorrichtung 33 umfaßt mehrere Krafteintragsarme 45, 47, 49, die sich krakenartig von der gemeinsamen, zentralen Kraftübertragungsstelle 37 weg erstrecken. Die Krafteintragsarme 45, 47, 49 sind dazu ausgelegt, die von dem an die Anhängerkupplung 35 anzukoppelnden Anhänger (nicht dargestellt) zu überwindenden Zugkräfte aufzuteilen und sicher sowie schonend in das selbsttragende Karosseriegerippe 1 einzuleiten. Hierbei können mehr als drei Krafteintragsarme 45, 47, 49 vorgesehen sein, insbesondere fünf, sechs, sieben, acht oder mehr als acht Krafteintragsarme.

Wie in Figur 3 dargestellt ist, erstrecken sich die Krafteintragsarme 45, 47 und 49 jeweils nicht vernachlässigbar, insbesondere überwiegend in Längsrichtung L des Karosseriegerippes 1.

Der Krafteintragsarm 45 erstreckt sich von der gemeinsamen Kraftübertragungsstelle 37 im wesentlichen in einem Winkeln von etwa 45° zur Längsrichtung L hin zu einem Stabknotenpunkt des Gitterrahmens 5, wo er an das Karosseriegerippe 1 kraftübertragend angebunden ist.

Die Kraftübertragungsarme 47, 49 erstrecken sich leicht hin zur nicht dargestellten Fahrbahnfläche geneigt, unterhalb der Bodengruppe und des Motorraums 25 des Karosseriegerippes 1. Die Kraftübertragungsarme 47, 49 befinden sich außerhalb des Karosseriegerippes 1. Auf diese Weise können beispielsweise schwächere Karosseriegerippeteile am Heck überbrückt werden, wobei die Anhängerkupplung 35 insbesondere mit dem steifen Achsträger 3 verbunden werden kann, der vor allem zur Übertragung von Zug- und Druckkräften geeignet ist. Beide Krafteintragsarme 47, 49 sind an einem Querträger 51 des Hauptachsträgers 3 angebunden, wobei Zusatzverbindungspunkte 53 längs des Achsträgers 3 vorgesehen sind.

Die Krafteintragsarme 47 und 49 sind untereinander durch Querstrebenplatten 55 verbunden, um den Torsionswiderstand der Rahmenversteifung 31 zu erhöhen.

Zudem sind an den Krafteintragsarmen 47, 49 seitliche, sich im wesentlichen nach oben erstreckende Verbindungsbleche 61, 63 vorgesehen, welche durch Stabprofile 67 in C-Form versteift sein können.

Die in der vorstehenden Beschreibung, den Figuren und den Ansprüchen offenbarten Merkmale können sowohl einzeln als auch in beliebiger Kombination für die Realisierung der Erfindung in den verschiedenen Ausgestaltungen von Bedeutung sein.

### Bezugszeichenliste

- 1: Karosseriegerippe
- 3: Achsträger
- 5: Gitterrahmen
- 7: Stäbe oder Querverstrebungen
- 9, 11, 13: Hauptverbindungsknotenpunkte
- 15, 17, 19: Nebenknotenpunkte
- 21: Türschwelle
- 23: Heck
- 25: Freiraum
- 31: Rahmenversteifung
- 33: erfindungsgemäße Anhängerkupplung
- 35: herkömmlichen Anhängerkupplung
- 37: Kraftübertragungsstelle
- 39: Bodenplatte
- 41, 43: Seitenwandabschnitte
- 38, 45, 47, 49: Krafteintragsarme
- 51: Querträger
- 53: Zusatzverbindungspunkt
- 55: Querstrebenplatten
- 61, 63: Verbindungsbleche
- 67: Stabprofil

## Patentansprüche

1. Anhängerkupplungsvorrichtung für ein niederfluriges Kraftfahrzeug, wie einen Omnibus, mit einem selbsttragenden Karosseriegerippe (1), das zumindest durch einen heckseitigen Achsträger (3) und durch einen Gitterrahmen (5) gebildet ist sowie einen heckseitigen Bauraum (25), wie einen Motorraum, zwischen dem Heck des Kraftfahrzeugs und dem Achsträger (3) bereitstellt, umfassend eine Anhängerkupplung an einer zentralen Kraftübertragungsstelle (37), **gekennzeichnet durch** mehrere, sich von der zentralen Kraftübertragungsstelle (37) erstreckende Krafteintragsarme (38, 45, 47, 49), die zum Einleiten von Belastungskräften in das Karosseriegerippe an dem Achsträger (3) und dem Gitterrahmen (5) befestigbar sind, wobei wenigstens zwei, vorzugsweise mehr als zwei Krafteintragsarme (47, 49) der mehreren Krafteintragsarme (38, 45, 47, 49) traversenartig zum Überwinden des heckseitigen Bauraums (25) des Karosseriegerippes (1) bemessen und zur festen Anbindung an den Achsträger (3) ausgeführt sind.

2. Anhängerkupplungsvorrichtung nach Anspruch 1, **dadurch gekennzeichnet, daß** sich die wenigstens zwei Krafteintragsarme (38) im wesentlichen in Fahrtrichtung von der Kraftübertragungsstelle (37) insbesondere unterhalb und außerhalb des heckseitigen Bauraums (25) erstrecken.

3. Anhängerkupplungsvorrichtung nach Anspruch 1 oder 2, **dadurch gekennzeichnet, daß** sie mehrere, vorzugsweise mehr als zwei, Krafteintragsarme (38) umfaßt, die zur Anbindung an den Gitterrahmen (5), insbesondere an verschiedene Knoten (11 bis 13) des Gitterrahmens (5), ausgeführt sind.

4. Anhängerkupplungsvorrichtung nach einem der Ansprüche 1 bis 3, **dadurch geken**n**zeichnet**, **daß** sich die mehreren Krafteintragsarme (38, 45, 47, 49) sternförmig oder krakenartig von der zentralen Kraftübertragungsstelle (37) weg erstrecken.

5. Anhängerkupplungsvorrichtung nach einem der Ansprüche 1 bis 4, **dadurch gekennzeichnet, daß** die mehreren Krafteintragsarme (38, 45, 47, 49) eine eigene Fachwerkstruktur bilden, insbesondere daß die mehreren Krafteintragsarme (38, 45, 47, 49) miteinander über Versteifungsstreben verbunden sind.

6. Anhängerkupplungsvorrichtung nach einem der Ansprüche 1 bis 5, **dadurch gekennzeichnet, daß** die Kraftübertragungsstelle (37) durch eine behälterförmige Bauweise versteift ist, die eine Bodenplatte (39) und eine sich davon erstreckende, umlaufende Wand aufweist.

7. Anhängerkupplungsvorrichtung nach Anspruch 6, **dadurch gekennzeichnet, daß** sich Krafteintragsarme (38, 45, 47, 49) von der Wand weg erstrecken.

8. Anhängerkupplungsvorrichtung nach einem der Ansprüche 1 bis 7, **dadurch gekennzeichnet, daß** wenigstens ein Krafteintragsarm (47, 49) mehrere Befestigungsstellen zum Anbinden an den Achsträger (3) und/oder an den Gitterrahmen (5) aufweist.

9. Selbsttragendes Karosseriegerippe (1) für einen Omnibus, welches Karosseriegerippe (1) zumindest einen heckseitigen Achsträger (3), einen Gitterrahmen (5) und eine nach einem der Ansprüche 1 bis 8 ausgebildete Anhängerkupplungsvorrichtung (33) umfaßt.

10. Selbsttragendes Karosseriegerippe nach Anspruche 9, das entsprechend einer Fachwerkstruktur mit mehreren Stabknotenpunkten (11 bis 13) ausgebildet ist, wobei die mehreren Krafteintragsarme (38, 45, 47, 49) jeweils an einem Knotenpunkt angebunden sind.

## Claims

1. Towing hook assembly for a low-floor motor vehicle, such as a bus, with a self-supporting body skeleton (1) which is formed at least by a rear axle bracket (3) and by a lattice frame (5), and also provides a rear construction space (25), such as an engine compartment, between the rear of the motor vehicle and the axle bracket (3), said assembly comprising a towing hook at a central force transmission point (37), **characterized by** a plurality of force input arms (38, 45, 47, 49) which extend from the central force transmission point (37) and can be fastened to the axle bracket (3) and the lattice frame (5) in order to introduce loading forces into the body skeleton, with at least two, preferably more than two, force input arms (47, 49) of the plurality of force input arms (38, 45, 47, 49) being designed in the manner of cross bars for reaching over the rear construction space (25) of the body skeleton (1) and being designed for fixed connection to the axle bracket (3).

2. Towing hook assembly according to Claim 1, **characterized in that** the at least two force input arms (38) extend substantially in the direction of travel from the force transmission point (37), in particular below and above the rear construction space (25).

3. Towing hook assembly according to Claim 1 or 2, **characterized in that** it comprises more than one, preferably more than two, force input arms (38) which are designed for connection to the lattice frame (5), in particular at different junctions (11 to 13) of the lattice frame (5).

4. Towing hook assembly according to one of Claims 1 to 3, **characterized in that** the plurality of force input arms (38, 45, 47, 49) extend away from the central force transmission point (37) in a star-shaped manner or in an octopus-like manner.

5. Towing hook assembly according to one of Claims 1 to 4, **characterized in that** the plurality of force input arms (38, 45, 47, 49) form a dedicated framework structure, in particular **in that** the plurality of force input arms (38, 45, 47, 49) are connected to one another via stiffening struts.

6. Towing hook assembly according to one of Claims 1 to 5, **characterized in that** the force transmission point (37) is stiffened by a container-shaped construction which has a base plate (39) and a peripheral wall extending therefrom.

7. Towing hook assembly according to Claim 6, **characterized in that** force input arms (38, 45, 47, 49) extend away from the wall.

8. Towing hook assembly according to one of Claims 1 to 7, **characterized in that** at least one force input arm (47, 49) has a plurality of fastening points for connection to the axle bracket (3) and/or to the lattice frame (5).

9. Self-supporting body skeleton (1) for a bus, which body skeleton (1) comprises at least one rear axle bracket (3), a lattice frame (5) and a towing hook assembly (33) designed according to one of Claims 1 to 8.

10. Self-supporting body skeleton according to Claim 9, which is designed in accordance with a framework structure with a plurality of bar-type junction points (11 to 13), wherein the plurality of force input arms (38, 45, 47, 49) are each connected to a junction point.

## Revendications

1. Dispositif d'attelage pour un véhicule automobile à plate-forme surbaissée, tel un bus, avec une ossature de carrosserie (1) autoportante, qui est au moins formée d'un support d'essieu (3) côté arrière et d'un cadre grillagé (5) et met à disposition un espace de construction (25) côté arrière, tel un compartiment moteur, entre l'arrière du véhicule automobile et le support d'essieu (3), comprenant un attelage au niveau d'un point de transmission de force (37) central, **caractérisé par** plusieurs bras d'introduction de force (38, 45, 47, 49) partant du point de transmission de force (37) central qui peuvent être fixés pour l'introduction d'efforts dans l'ossature de carrosserie au niveau du support d'essieu (3) et du cadre grillagé (5), au moins deux, de préférence plus de deux bras d'introduction de force (47, 49) de la pluralité de bras d'introduction de force (38, 45, 47, 49) étant dimensionnés en forme de traverse pour franchir l'espace de construction (25) côté arrière de l'ossature de carrosserie (1) et réalisés pour être attachés solidement au support d'essieu (3).

2. Dispositif d'attelage selon la revendication 1, **caractérisé en ce que** les au moins deux bras d'introduction de force (38) s'étendent sensiblement dans le sens de la marche depuis le point de transmission de force (37) en particulier sous et en dehors de l'espace de construction (25) côté arrière.

3. Dispositif d'attelage selon la revendication 1 ou 2, **caractérisé en ce qu'**il comprend plusieurs, de préférence plus de deux bras d'introduction de force (38), qui sont réalisés pour être attachés au cadre grillagé (5), en particulier à différents noeuds (11 à 13) du cadre grillagé (5).

4. Dispositif d'attelage selon l'une quelconque des revendications 1 à 3, **caractérisée en ce que** la pluralité de bras d'introduction de force (38, 45, 47, 49) s'éloigne en forme d'étoile ou de pieuvre du point de transmission de force (37) central.

5. Dispositif d'attelage selon l'une quelconque des revendications 1 à 4, **caractérisé en ce que** la pluralité de bras d'introduction de force (38, 45, 47, 49) forme une propre structure en treillis, en particulier **en ce que** la pluralité de bras d'introduction de force (38, 45, 47, 49) sont reliés l'un à l'autre par le biais d'entretoises de rigidification.

6. Dispositif d'attelage selon l'une quelconque des revendications 1 à 5, **caractérisé en ce que** le point de transmission de force (37) est rigidifié par une construction en forme de caisson, qui présente une plaque de fond (39) et une paroi périphérique s'en éloignant.

7. Dispositif d'attelage selon la revendication 6, **caractérisé en ce que** des bras d'introduction de force (38, 45, 47, 49) s'éloignent de la paroi.

8. Dispositif d'attelage selon l'une quelconque des revendications 1 à 7, **caractérisé en ce que** l'au moins un bras d'introduction de force (47, 49) présente plusieurs points de fixation à attacher au support d'essieu (3) et/ou au cadre grillagé (5).

9. Ossature de carrosserie autoportante (1) pour un bus, laquelle ossature de carrosserie (1) comprend au moins un support d'essieu (3) côté arrière, un cadre grillagé (5) et un dispositif d'attelage (33) réalisé selon l'une quelconque des revendications 1 à 8.

10. Ossature de carrosserie autoportante selon la revendication 9, qui est réalisée en correspondance avec une structure en treillis avec plusieurs noeuds de barres (11 à 13), la pluralité de bras d'introduction de force (38, 45, 47, 49) étant attachée respectivement à un noeud.
